(19) Europäisches Patentamt
European Patent Office
Office européen des brevets

(11) **EP 3 092 471 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **15703724.3**

(22) Anmeldetag: **08.01.2015**

(51) Int Cl.:
**G01M 13/025** (2019.01)

(86) Internationale Anmeldenummer:
**PCT/AT2015/050007**

(87) Internationale Veröffentlichungsnummer:
**WO 2015/103658 (16.07.2015 Gazette 2015/28)**

(54) **VERFAHREN UND EINRICHTUNG ZUR REGELUNG EINES ANTRIEBSSTRANG-PRÜFSTANDS**

METHOD AND DEVICE FOR CONTROLLING A POWERTRAIN TEST STAND

PROCÉDÉ ET DISPOSITIF DE RÉGULATION D'UN BANC D'ESSAI DE CHAÎNE CINÉMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2014 AT 500112014**

(43) Veröffentlichungstag der Anmeldung:
**16.11.2016 Patentblatt 2016/46**

(73) Patentinhaber: **Kristl, Seibt & Co. Gesellschaft M.B.H.**
**8052 Graz (AT)**

(72) Erfinder:
• **BAUER, Robert**
  **A-8041 Graz (AT)**
• **PRESSL, Bernd**
  **A-8044 Graz (AT)**
• **BASCHNEGGER, Martin**
  **A-6900 Bregenz (AT)**
• **WIPFLER, Martin**
  **A-8501 Lieboch (AT)**

(74) Vertreter: **Sonn & Partner Patentanwälte**
**Riemergasse 14**
**1010 Wien (AT)**

(56) Entgegenhaltungen:
**AT-A2- 512 483     DE-A1-102010 049 687**
**US-A1- 2011 303 000     US-B1- 6 754 615**

**Beschreibung**

Die Erfindung betrifft ein Verfahren zur Regelung sowie eine Regeleinrichtung eines Antriebsstrang-Prüfstands mit einer Eintriebsmaschine und einer Abtriebsmaschine, wobei ein von der Eintriebsmaschine aufgebrachtes Drehmoment mit einem inneren Regelkreis geregelt wird, und mit einem äußeren Regelkreis zur Regelung der Führungsgröße des inneren Regelkreises in Abhängigkeit einer aktuellen Drehzahl der Eintriebsmaschine, so dass eine Führungsgröße für die Regelung des Drehmoments der Eintriebsmaschine zur Dämpfung von Schwingungen zwischen der Eintriebsmaschine und der Abtriebsmaschine in Abhängigkeit von einer aktuellen Drehzahl der Eintriebsmaschine gegenüber einem Vorgabewert modifiziert wird.

Bei einem Antriebsstrang-Prüfstand wird die zu prüfende Komponente (nachstehend auch kurz Prüfling genannt) meist zwangsweise nicht wie an ihrem späteren Einsatzort mit der Umwelt verbunden. Beispielsweise wird ein Antriebsstrang am Prüfstand über relativ steife Wellen an eine Eintriebsmaschine und eine oder mehrere Belastungsmaschinen bzw. - allgemeiner - Abtriebsmaschinen angeschlossen, anstatt über Reifen mit der Straße in Kontakt zu stehen. Dadurch ergeben sich am Prüfstand meist schwach gedämpfte (und dadurch stark ausgeprägte) Resonanzfrequenzen, die der Prüfling an seinem tatsächlichen Einsatzort nicht vorfindet. Werden diese Resonanzfrequenzen von einer der Maschinen angeregt, können die sich ergebenden Schwingungen das Prüfergebnis massiv beeinflussen oder sogar zur Zerstörung des Prüflings und/oder des Prüfstands führen. Deswegen sind Maßnahmen zur Dämpfung dieser Resonanzfrequenzen am Prüfstand notwendig. Im Folgenden werden die bekannten Methoden aufgezählt.

Durch den Einsatz von weicheren, stärker gedämpften Verbindungswellen können die Resonanzfrequenzen vor allem gesenkt und zusätzlich auch stärker gedämpft werden. Werden die Resonanzfrequenzen im Normalbetrieb nicht mehr angeregt, ist das Problem somit gelöst. Nachteilig wirkt sich die Tiefpasswirkung der weichen Verbindungswelle aus. Außerdem kann durch Reibung eine nicht unerhebliche Leistung in der Welle umgesetzt werden (die Welle wird heiß und eventuell zerstört).

Abgesehen von einer solchen passiven Dämpfung sind bereits Verfahren zur aktiven Dämpfung bekannt, bei denen der Abtriebsmaschine ein zusätzliches Moment aufgebracht wird, das einer Wellendämpfung entspricht. Dafür kann etwa die Differenzwinkelgeschwindigkeit der Welle, d.h. die Differenz zwischen den gemessenen Drehzahlen an der Abtriebsmaschine und der Eintriebsmaschine, herangezogen werden (vgl. z.B.

DE 38 08 524 C2). Der Nachteil bei der Verwendung der beiden aktuellen Drehzahlen am Abtrieb und am Eintrieb liegt darin, dass diese Drehzahlen möglicherweise nur verrauscht und mit erheblicher Verzögerung, z.B. aufgrund von Bus-Übertragungszeit und/oder Filterung des Signals, zur Verfügung stehen. Im schlimmsten Fall kann durch das Aufschalten eines solcherart verzerrten Dämpfungsmoments der Antriebsstrang-Prüfstand erst recht instabil werden.

Die Notwendigkeit einer hohen Genauigkeit und Dynamik bei der Verwendung der beiden Drehzahlen wurde bereits in EP 1 333 268 A2 erkannt. Dort wird vorgeschlagen, die Differenzwinkelgeschwindigkeit mit Hilfe des gemessenen Wellenmoments abzuschätzen: Das gemessene Wellenmoment wird differenziert, mit einem Korrekturfaktor gewichtet und dem Drehmomentsollwert der Abtriebsmaschine als Korrekturwert aufgeschaltet. Die Differentiation einer Messgröße hat jedoch den Nachteil, dass das immer vorhandene Messrauschen erheblich verstärkt wird. Zwar könnte man das differenzierte Moment mit einem Tiefpass filtern, allerdings wird dann diese Methode bei höheren Resonanzfrequenzen instabil, wodurch der Einsatz in der Praxis stark eingeschränkt ist. Weiters wird bei großen Prüfständen mit Spiel und vielen verteilten Massen (z.B. bei Antriebssträngen mit Anpassgetrieben) nur die erste, maschinennahe Welle auf diese Art gedämpft; die übrigen Wellen bleiben ungedämpft.

Darüber hinaus ist in WO 2013/126940 A1 ein Verfahren gezeigt, bei dem das gemessene Wellenmoment nicht differenziert, sondern als solches entweder direkt oder nach einer Tiefpassfilterung dem Drehmomentsollwert der Abtriebsmaschine aufgeschaltet wird. Diese im ersten Moment überraschende Maßnahme bewirkt insbesondere bei hohen Resonanzfrequenzen eine sehr gute Dämpfung. Sind die am Prüfstand vorhandenen Massen jedoch groß bzw. die zu dämpfende Eigenfrequenz klein, ist die erzielbare Dämpfungswirkung gering.

Weitere, vergleichsweise kompliziertere Verfahren zur aktiven Dämpfung zeigen alternative Möglichkeiten zur Verwendung eines gemessenen Drehmoments (z.B. DE 102 47 347 A und US 4,468,958 A) oder aber versuchen, das Resonanzverhalten des Prüfstands vorherzusehen (z.B. AT 010 301 U2 und US 8,006,548 B2).

Im Zusammenhang mit einer möglichst realistischen Simulation bzw. Nachbildung des Verhaltens eines Fahrzeugs auf einer Fahrbahn ist es außerdem bereits bekannt, die Belastungsmaschinen eines Antriebsstrang-Prüfstands, d.h. die Abtriebsmaschinen, unter Verwendung eines Reifenmodells zu regeln. Dabei kann entweder die Drehzahl (s. AT 508 031 B1) oder das Drehmoment (s. EP 1 037 030 B1) der Abtriebsmaschinen entsprechend geregelt sein. Ziel beider Verfahren ist es, den Abtrieb des Antriebsstrangs realistischer zu belasten und nicht, die Schwingungen und insbesondere etwaige Eigenfrequenzen des Prüflings am Prüfstand zu dämpfen. Eine solche realistische Belastung wird offensichtlich dann erzielt, wenn das Reifenmodell bei der Regelung des Abtriebs (nicht aber des Eintriebs) herangezogen wird.

Die US 2012/0166154 A1 betrifft eine Schlupf-Simulation an den Abtriebsmaschinen eines Antriebsstrangs, wobei durch Verwendung eines Reifenmodells der Prüfling am Prüfstand richtig, d.h. realistisch, belastet werden soll.

Der Grund für die Verwendung des Reifenmodells am Prüfstand liegt also auch hier darin, einen realen Reifen zu ersetzen. Die für eine korrekte Simulation gewünschte Dämpfung von Eigenfrequenzen wird durch eine passende Einstellung eines Proportional- und Differentialanteils im Drehzahlregler bewerkstelligt.

Auch die DE 10 2010 049 689 A1 betrifft eine realistischere Belastung des Prüflings, wenn ein realer Reifen durch ein Reifenmodell ersetzt wird. Dabei verfolgt sie den Zweck, den Reifen durch ein besseres Reifenmodell am Prüfstand nachzubilden, wobei insbesondere durch ein detailliertes Reifenmodell etwa der Walkwiderstand, Einfluss der Reifentemperatur und des Reifenfülldrucks, Anteil der Fahrbahnunebenheiten und dynamischen Radlasten usw. untersucht werden können. Dies ist offensichtlich nur dann sinnvoll, wenn das Reifenmodell anstelle eines realen Reifens zum Einsatz kommt. Weiters deutet die DE 10 2010 049 689 A1 an, einzelne Reglerparameter, wie etwa den P-, I- und D-Anteil eines PID-Reglers, anhand eines Reifenmodells zu bestimmen, wobei eine konkrete Vorgehensweise hierfür nicht offenbart ist.

Auch die DE 10 2010 049 687 A1 offenbart die Verwendung eines Reifenmodells anstelle eines realen Reifens, wodurch die Aufgabe eines besonders realitätsnahen Betriebs gelöst werden soll.

Die AT 512 483 A2 betrifft grundsätzlich ein Verfahren zur Reduzierung der Anregung von unerwünschten Schwingungen und Resonanzen in einem Prüfstand. Außerdem ist auch die Verwendung eines Radsimulationsmodells beschrieben. Allerdings wird letzteres nur zur Steuerung einer Belastungsmaschine (d.h. einer Abtriebsmaschine) verwendet, d.h. ebenfalls an der Stelle, an der es auch real einen Reifen gibt.

Die US 2011/0303000 A1 offenbart einen Prüfstand für ein Fahrzeug mit mehreren Dynamometern, die gemäß einem Reifenmodell angesteuert werden.

Die US 6,754,615 B1 betrifft einen Prüfstand, bei dem ein Verbrennungsmotor durch eine elektrische Maschine belastet wird, die gemäß einem Reifenmodell angesteuert wird.

Im Stand der Technik wird ein Reifenmodell demzufolge immer zweckentsprechend und mit dem ausschließlichen Verwendungsgrund, einen realen Reifen zu ersetzen, eingesetzt.

Es ist Aufgabe der vorliegenden Erfindung, ein Verfahren der eingangs angeführten Art bzw. eine Vorrichtung zur Durchführung dieses Verfahrens zu schaffen, welches bzw. welche die oben beschriebenen Schwingungsprobleme auf einfache und effiziente Weise vermeidet oder zumindest auf ein unbedenkliches Maß reduziert. Dabei sollen Probleme mit zeitlich verzögerten und versetzten Messwerten vermieden werden und eine Dämpfung auch von verhältnismäßig niederfrequenten Schwingungen gelingen. Die Regelung soll außerdem gegen Messrauschen unempfindlich sein und auch bei transienten Prüfungen - insbesondere bei der erstmaligen Prüfung eines Prüflings - die gewünschte Dämpfung erzielen.

Zur Lösung der gestellten Aufgabe sieht die Erfindung ein Verfahren wie eingangs angegeben vor, das dadurch gekennzeichnet ist, dass die Führungsgröße für die Regelung des Drehmoments der Eintriebsmaschine aus einem Reifenmodell eines virtuellen Reifens ermittelt wird. In entsprechender Weise sieht die Erfindung bei der Regeleinrichtung wie eingangs angegeben vor, dass der äußere Regelkreis zur Regelung der Führungsgröße des inneren Regelkreises in Abhängigkeit einer aktuellen Drehzahl der Eintriebsmaschine ein Reifenmodell eines virtuellen Reifens aufweist. Die Erfindung beruht auf einem unkonventionellen und zunächst überraschenden Einsatz des Reifenmodells an einer Stelle, an der es eigentlich (real) keinen Reifen gibt. Das Reifenmodell wird daher nicht eingesetzt, um einen realen Reifen zu ersetzen (weil ein solcher an dieser Stelle gar nicht existiert) sondern ausschließlich aufgrund seiner dämpfenden Wirkung. Durch das bei der Regelung des Eintriebs, d.h. der Eintriebsmaschine des Antriebsstrang-Prüfstands, eingesetzte Reifenmodell wird keine realistischere Belastung des Antriebsstrangs erzielt; es wird lediglich die dämpfende Wirkung einer solchen Regelung vorteilhaft (auch) am Eintrieb genutzt. Dabei geht zwar naturgemäß die aktuelle Drehzahl der Eintriebsmaschine (an welcher der virtuelle Reifen angeordnet ist) - oder eine äquivalente Messgröße - in das Reifenmodell ein, eine Messung mehrerer Drehzahlen am Antriebsstrang ist jedoch nicht erforderlich, so dass Probleme, welche sich aus dem relativen zeitlichen Verhalten mehrerer Messwerte ergeben, vermieden werden können.

Es ist dabei besonders günstig, wenn das Reifenmodell einen, vorzugsweise statischen, Zusammenhang zwischen der Führungsgröße und einem Schlupf des virtuellen Reifens herstellt bzw. einen solchen Zusammenhang aufweist. Der Schlupf des Reifens, welcher eine Voraussetzung für einen Energieübertrag ist, und ein entsprechendes Schlupfmodell eignen sich besonders gut für das vorliegende Verfahren. Bei einem statischen Zusammenhang zwischen dem Schlupf und der Führungsgröße, d.h. dem (modifizierten) Drehmoment-Sollwert, können Einflüsse anderer - dynamischer - Messgrößen vollständig vermieden werden.

Bei einem besonders einfachen und daher bevorzugten Reifenmodell wird die Führungsgröße im Wesentlichen nach der Formel $M_x = F_z \cdot r_{dyn} \cdot D \cdot \sin(C \cdot \arctan(B \cdot s))$ berechnet bzw. ist der äußere Regelkreis zur Ermittlung der Führungsgröße im Wesentlichen nach dieser Formel eingerichtet, wobei $F_z$ eine Aufstandskraft, $r_{dyn}$ ein Rollradius, B, C und D konstante Reifenparameter und s ein Schlupf des virtuellen Reifens ist. Bei diesem Modell zeigt die Führungsgröße nur in einem kleinen Bereich lineares Verhalten und der Betrag von abrupten Änderungen wird limitiert.

Wenn eine virtuelle Fahrbahngeschwindigkeit, welche in das Reifenmodell, insbesondere in den Schlupf des virtuellen Reifens, eingeht, aus einem inversen Reifenmodell ermittelt wird bzw. wenn der äußere Regelkreis zur Ermittlung einer virtuellen Fahrbahngeschwindigkeit aus einem inversen Reifenmodell eingerichtet ist, kann die Steuerung der Eintriebsmaschine vorteilhafter Weise (weiterhin) durch Vorgabe eines gewünschten Drehmoments erfolgen. Das inverse Reifenmodell kann dabei unabhängig von dem Reifenmodell gewählt werden. Insbesondere muss das inverse Reifenmodell keineswegs dem mathematisch Inversen des Reifenmodells entsprechen, sondern kann beispielsweise aus einem vereinfachten Reifenmodell abgeleitet werden.

In diesem Zusammenhang ist es vorteilhaft, wenn die virtuelle Fahrbahngeschwindigkeit aus dem Vorgabewert für die Führungsgröße und einer Soll-Drehzahl der Eintriebsmaschine ermittelt wird, welche Soll-Drehzahl vorzugsweise proportional einer Soll-Drehzahl der Abtriebsmaschine ist. In entsprechender Weise ist der äußere Regelkreis vorzugsweise zur Ermittlung der virtuellen Fahrbahngeschwindigkeit aus einem Vorgabewert für die Führungsgröße und einer Soll-Drehzahl der Eintriebsmaschine eingerichtet. Durch die ausschließliche Verwendung von gegebenen statischen Größen können etwaige Rückkopplungen von dynamischen Messgrößen - neben der aktuellen Drehzahl der Eintriebsmaschine - in das Reifenmodell unterbunden werden.

Die Ableitung des inversen Reifenmodells ist besonders einfach, wenn das inverse Reifenmodell einen linearen Zusammenhang zwischen der virtuellen Fahrbahngeschwindigkeit und der Soll-Drehzahl der Eintriebsmaschine herstellt bzw. aufweist. Der lineare Zusammenhang kann hier verwendet werden, ohne Nachteile hinsichtlich der dämpfenden Wirkung des Reifenmodells hinnehmen zu müssen, da das Reifenmodell (im Unterschied zum inversen Reifenmodell) sehr wohl einen zumindest teilweise nicht-linearen Zusammenhang aufweisen kann.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. In den Zeichnungen zeigen dabei im Einzelnen:

Fig. 1 schematisch einen Antriebsstrang-Prüfstand mit Differential ohne Anpassgetriebe;
Fig. 2 schematisch einen Antriebsstrang-Prüfstand mit Differential mit Anpassgetrieben am Eintrieb und am Abtrieb;
Fig. 3 einen Eintriebs-Drehmomentverlauf bei einem Lastwechsel an einem Prüfstand gemäß dem Stand der Technik zum Vergleich;
Fig. 4 schematisch das Prinzip einer Regelung des Eintriebs mit virtuellem Reifen;
Fig. 5 eine Reibwert-Schlupf-Kennlinie gemäß einem typischen Reifenmodell;
Fig. 6 einen Eintriebs-Drehmomentverlauf bei einem Lastwechsel unter dem vorliegenden Regelverfahren zum Vergleich; und
Fig. 7 ein Diagramm der Reibwert-Schlupf-Kennlinien gemäß drei verschiedenen Reifenmodellen im Vergleich.

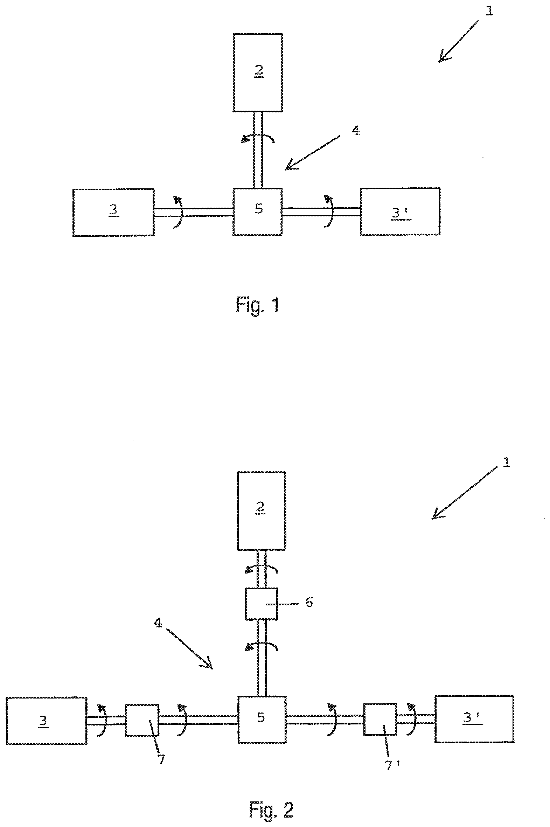

Fig. 1 und Fig. 2 zeigen jeweils einen Antriebsstrang-Prüfstand 1 mit einer Eintriebsmaschine 2 und zwei Abtriebsmaschinen 3, 3', welche mit einem zu prüfenden Antriebsstrang 4 verbunden sind. Der Antriebsstrang 4 weist ein Hinterachs-Differential 5 auf. Bei einem solchen Antriebsstrang-Prüfstand 1 werden meist nur Teile eines Antriebsstrangs 4 mit Hilfe von Ein- 2 und Abtriebsmaschinen 3, 3' entsprechend vorgegebener Drehzahl- und Drehmomentverläufe belastet. Aufgrund der Übersetzung $i_D$ des Differentials 5 gilt für die Winkelgeschwindigkeiten der Maschinen 2, 3, 3'

$$\omega_E = i_D \frac{\omega_{A1} + \omega_{A2}}{2} \qquad (1)$$

wobei $\omega_E$ die Winkelgeschwindigkeit der Eintriebsmaschine 2, und $\omega_{A1}$ bzw. $\omega_{A2}$ die Winkelgeschwindigkeiten der beiden Abtriebsmaschinen 3, 3' sind. Weiters gilt - abgesehen von Reibungsverlusten im Differential 5 - für die Drehmomente

$$M_{A1} + M_{A2} = i_D M_E \qquad (2)$$

Um das Differential 5 mit größeren Drehmomenten belasten zu können, als die Maschinen 2, 3, 3' liefern könnten, werden oft auch Anpassgetriebe 6, 7, 7' wie in Fig. 2 dargestellt verwendet. Das der Eintriebsmaschine 2 zugeordnete Anpassgetriebe 6 weist eine Übersetzung $i_E$ auf und die den Abtriebsmaschinen 3, 3' zugeordneten Anpassgetriebe 7, 7' weisen jeweils eine Übersetzung $i_A$ auf. Die Anpassgetriebe 6, 7, 7' werden dabei so eingesetzt, dass die Drehmomente auf der Prüflingsseite, d.h. seitens des zu prüfenden Antriebsstrangs 4, größer sind als auf der Maschinenseite. Für die Winkelgeschwindigkeiten $\omega_E$, $\omega_{A1}$, $\omega_{A2}$ der Maschinen 2, 3, 3' gilt daher

$$\omega_E = i_E \omega_{GE}, \quad \omega_{A1} = i_A \omega_{GA1} \text{ und } \omega_{A2} = i_A \omega_{GA2} \qquad (3)$$

wobei $\omega_{GE}$ die Winkelgeschwindigkeit am eintriebsseitigen Anpassgetriebe 6 und $\omega_{GA1}$ bzw. $\omega_{GA2}$ die Winkelgeschwindigkeiten an den beiden abtriebsseitigen Anpassgetrieben 7, 7' sind. Für die Drehmomente - wieder von Reibungsverlusten in den Anpassgetrieben abgesehen - folgt daraus:

$$M_{GE} = i_E M_E, \quad M_{GA1} = i_A M_{A1} \quad \text{und} \quad M_{GA2} = i_A M_{A2} \tag{4}$$

wobei - analog zu den Winkelgeschwindigkeiten - $M_{GE}$ das Drehmoment am eintriebsseitigen Anpassgetriebe 6 und $M_{GA1}$ bzw. $M_{GA2}$ die Drehmomente an den beiden abtriebsseitigen Anpassgetrieben 7, 7' sind. Üblicherweise werden für die Prüfung am Prüfstand 1 die Drehzahlen $n_{A1}$, $n_{A2}$ des Abtriebs und das Drehmoment $M_E$ beim Eintrieb vorgegeben. Dementsprechend werden meist die Abtriebsmaschinen 3, 3' drehzahlgeregelt und die Eintriebsmaschine 2 drehmomentgeregelt betrieben. Ohne weitere Maßnahmen schwingt der Aufbau am Prüfstand 1 insbesondere mit der ersten Eigenfrequenz (Trägheit der Eintriebsmaschine 2 über Steifigkeiten der Wellenverbindungen gegen Trägheit der Abtriebsmaschinen 3, 3'). Dieses Problem wird mit Anpassgetrieben 6, 7, 7' noch verschärft, da der Prüfling 4 durch die Übersetzungen $i_E$, $i_{A1}$, $i_{A2}$ wesentlich größere Maschinenträgheiten sieht. Weiters wirken sich die Trägheiten und Spiele der Anpassgetriebe 6, 7, 7' selbst auch negativ auf das Schwingungsverhalten aus.

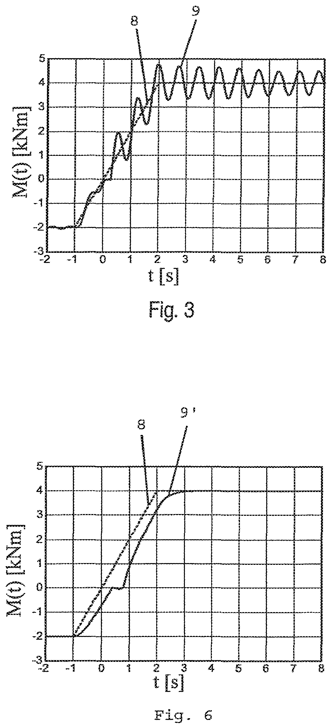

Fig. 3 zeigt beispielhaft einen möglichen Eintriebs-Drehmomentverlauf bei einem Lastwechsel (gute Anregung der ersten Eigenfrequenz durch das harte Anschlagen nach dem Durchfahren des Spiels). Die gestrichelte Linie 8 repräsentiert den sich mit der Zeit t (welche auf der Abszisse aufgetragen ist) ändernden Vorgabewert $M_{E,soll}$ des Drehmoments der Eintriebsmaschine 2. Die durchgezogene Linie 9 stellt den zeitlichen Verlauf des tatsächlich wirkenden Drehmoments $M_E$ dar. Die hier dargestellte, extrem schwach gedämpfte, niederfrequente Schwingung des Drehmoments $M_E$ ist natürlich unerwünscht und sollte verringert werden.

Gemäß dem vorliegenden Verfahren zur Regelung des Drehmoments $M_E$ der Eintriebsmaschine 2 wird an der Eintriebsmaschine 2 virtuell ein Rad mit Reifen montiert, das auf einer virtuellen Fahrbahn fährt. Die Fahrbahngeschwindigkeit wird dabei so gewählt, dass sich zusammen mit dem Reifenschlupf stationär genau das gewünschte Drehmoment $M_E$, d.h. entsprechend einem Vorgabewert $M_{E,soll}$ (nachfolgend auch kurz $M_{soll}$ genannt), einstellt. Das Prinzip der Regelung ist in Fig. 4 schematisch dargestellt. Wie in Fig. 4 gezeigt, wird die rechts als Ausgabewert eingezeichnete Führungsgröße $M_x$ der Drehmomentregelung der Eintriebsmaschine 2 aus dem durch den Block 10 repräsentierten Reifenmodell erhalten. In das Reifenmodell 10 gehen - abgesehen von konstanten Modellparametern, die hier nicht dargestellt sind - die aktuelle Drehzahl $n_{E,ist}$ (bzw. kurz $n_{ist}$) der Eintriebsmaschine 2 sowie die virtuelle Fahrbahngeschwindigkeit v ein. Die aktuelle Eintriebs-Drehzahl $n_{ist}$ wird an der Eintriebsmaschine 2 gemessen. Die virtuelle Fahrbahngeschwindigkeit v wird aus dem durch den zweiten Block 11 repräsentierten inversen Reifenmodell erhalten. Das inverse Reifenmodell 11 entspricht im Allgemeinen nicht dem Inversen des Reifenmodells 10, sondern es handelt sich dabei z.B. um ein vereinfachtes Reifenmodell, welches einfacher zu invertieren ist. In das inverse Reifenmodell 11 gehen - wiederum abgesehen von eigenen konstanten Modellparametern - eine Soll-Drehzahl $n_{E,soll}$ (bzw. kurz $n_{soll}$) der Eintriebsmaschine 2 sowie der Vorgabewert $M_{soll}$ für das Drehmoment $M_E$ der Eintriebsmaschine 2 ein.

Bei den dem Reifenmodell 10 sowie dem inversen Reifenmodell 11 zugrunde liegenden Reifenmodellen kann es sich jeweils um ein beliebiges Reifenmodell handeln, d.h. ein Modell, welches das Übertragungsverhalten eines Rads mit einem Reifen anzunähern geeignet ist und/oder vergleichbare Dämpfungseigenschaften aufweist. Im Folgenden ist beispielhaft ein einfaches Reifenmodell beschrieben, das auf der so genannten "magischen Formel" von Pacejka beruht (s. Pacejka H., "Tyre and Vehicle Dynamics", 2. Auflage, Butterworth-Heinemann, Oxford, 2007). Man könnte aber auch von einem anderen Reifenmodell mit ähnlichen qualitativen Eigenschaften ausgehen, wie beispielsweise dem Modell "TMsimple" von Hirschberg (s. Hirschberg W., "TMsimple Application Manual", 2007), dem Modell "TMeasy" von Rill (s. Rill G., "Simulation von Kraftfahrzeugen", Vieweg-Verlag, Regensburg, 2007), dem "Hohenheimer Reifenmodell" oder dem von der Firma Michelin entwickelten Reifenmodell "TameTire", wobei vorteilhafter Weise eine möglichst einfache Version für das vorliegende Verfahren eingesetzt wird.

Ausgangspunkt ist bei dem hier demonstrierten Modell ein Rad mit der Winkelgeschwindigkeit $\omega_R$ und mit dem - hier konstant angenommenen - dynamischen Rollradius $r_{dyn}$ sowie einer Fahrbahngeschwindigkeit v. Alternativ kann der dynamischen Rollradius $r_{dyn}$ abhängig von der Fahrbahngeschwindigkeit v (bzw. der entsprechenden Fahrzeuggeschwindigkeit) leicht verändert werden, z.B. entsprechend einem polynomialen Ansatz, allerdings hat sich der mögliche Einfluss einer solchen Veränderung auf die dämpfende Wirkung als vernachlässigbar herausgestellt. Mit den obigen Größen kann ein Schlupf des virtuellen Reifens als

$$s = \frac{r_{dyn} \omega_R - v}{\max(v_{low}, |v|)} \tag{5}$$

angegeben werden, wobei die Grenzgeschwindigkeit $v_{low}$ eine Division durch Null verhindert. In der Literatur gibt es auch andere Schlupfdefinitionen; die hier gezeigte ist die von Pacejka bevorzugte Variante. (Eine Alternative wird weiter unten ebenfalls erläutert.) Mit diesem Schlupf s kann mit Hilfe der einfachen "magischen Formel" für die Längsbewegung der Reibwert $\mu$ aus

$$\mu(s) = D\sin(C\arctan(B \cdot s)) \qquad (6)$$

mit den drei Reifenparametern B, C und D berechnet werden.

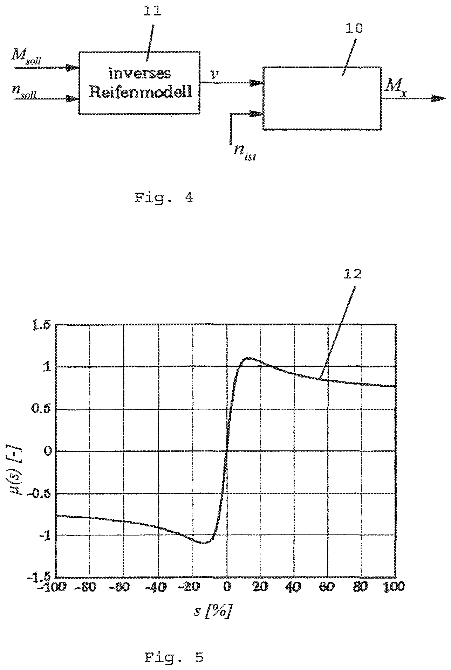

Fig. 5 zeigt eine Reibwert-Schlupf-Kennlinie 12 für einen typischen Reifen. Mit der Aufstandskraft $F_z$ zwischen dem virtuellen Reifen und der virtuellen Fahrbahn kann nun die im Reifenlatsch wirkende Längskraft

$$F_x = \mu\, F_z \qquad (7)$$

und schließlich das aufgrund des Schlupfs s wirkende Drehmoment

$$M_x = F_x\, r_{dyn} = F_z\, r_{dyn}\, D\sin(C\arctan(B \cdot s)) \qquad (8)$$

berechnet werden. Üblicherweise wird bei einem Reifenmodell auch die Rollreibung berücksichtigt. Um die vorliegende Regelung zu vereinfachen, wird hier auf die Modellierung der Rollreibung verzichtet. Für die Aufstandskraft $F_z$ könnte man ein Karosseriemodell einsetzen; der Einfachheit halber wählt man aber eine konstante Aufstandskraft $F_{z,0}$. Mit diesen Vereinfachungen und wenn Gleichung (5) in Gleichung (8) eingesetzt wird, erhält man mit

$$M_x = F_{z,0} \cdot r_{dyn} \cdot D \cdot \sin\left(C \cdot \arctan\left(B \cdot \frac{r_{dyn}\,\omega_R - v}{\max(v_{low},\,|v|)}\right)\right) \qquad (9)$$

den Zusammenhang zwischen Drehmoment $M_x$, Winkelgeschwindigkeit $\omega_R$ und Fahrbahngeschwindigkeit v bei einer bestimmten konstanten Aufstandskraft $F_{z,0}$. Für die Winkelgeschwindigkeit $\omega_R$ wird bei der Regelung gemäß Fig. 4 die umgerechnete aktuelle Drehzahl $n_{E,ist}$ (bzw. kurz $n_{ist}$) der Eintriebsmaschine 2 eingesetzt:

$$\omega_R = \frac{\pi}{30}\, n_{ist} \qquad (10)$$

Möchte man nun für einen gegebenen Vorgabewert $M_{soll}$ des Drehmoments $M_E$ und eine aktuelle Drehzahl $n_{ist}$ die passende Fahrbahngeschwindigkeit v berechnen, ist dies zwar möglich, aber sehr aufwendig. Eventuell gibt es aufgrund der nichtlinearen Reibwert-Schlupf-Kennlinie (s. Fig. 5) auch mehrere oder aber gar keine Lösung. Eine in diesem Zusammenhang sinnvolle Vereinfachung besteht daher darin, anstelle der nichtlinearen Reibwert-Schlupf-Kennlinie eine lineare Kennlinie

$$\mu(s) = k \cdot s \qquad (11)$$

mit der Steigung k zu verwenden, wobei die Steigung am besten so wie im Ursprung der nichtlinearen Reibwert-Schlupf-Kennlinie gewählt wird; es gilt dann:

$$k = B \cdot C \cdot D \qquad (12)$$

Somit vereinfacht sich Gleichung (9) zu

$$M_x = F_{z,0} \cdot r_{\mathrm{dyn}} \cdot k \cdot \frac{r_{\mathrm{dyn}} \omega_R - v}{\max(v_{\mathrm{low}}, |v|)} \qquad (13)$$

und man kann nach der Fahrbahngeschwindigkeit auflösen, um zu einem vereinfachten inversen Reifenmodell zu gelangen:

$$v = \begin{cases} \dfrac{F_{z,0}\, r_{\mathrm{dyn}}^2\, k\, \omega_R}{F_{z,0}\, r_{\mathrm{dyn}}\, k + M_x} & \text{für} \quad v \geqslant v_{\mathrm{low}} \\[3mm] \dfrac{F_{z,0}\, r_{\mathrm{dyn}}^2\, k\, \omega_R - M_x\, v_{\mathrm{low}}}{F_{z,0}\, r_{\mathrm{dyn}}\, k} & \text{für} \quad |v| \leq v_{\mathrm{low}} \\[3mm] \dfrac{F_{z,0}\, r_{\mathrm{dyn}}^2\, k\, \omega_R}{F_{z,0}\, r_{\mathrm{dyn}}\, k - M_x} & \text{für} \quad v \leq -v_{\mathrm{low}} \end{cases} \qquad (14)$$

Zur Ermittlung der Fahrbahngeschwindigkeit v aus dem inversen Reifenmodell gemäß Gleichung (14) wird für das Drehmoment $M_x$ der Vorgabewert $M_{\mathrm{soll}}$ und für die Winkelgeschwindigkeit $\omega_R$ die umgerechnete Soll-Drehzahl $n_{E,\mathrm{soll}}$ der Eintriebsmaschine 2 eingesetzt:

$$M_x = M_{\mathrm{soll}} \qquad \omega_R = \frac{\pi}{30} \cdot n_{E,\mathrm{soll}} \qquad (15)$$

Die Soll-Drehzahl $n_{E,\mathrm{soll}}$ der Eintriebsmaschine 2 berechnet sich aus den Soll-Drehzahlen $n_{A1,\mathrm{soll}}$ und $n_{A2,\mathrm{soll}}$ der Abtriebsmaschinen 3, 3' unter Berücksichtigung der anwendbaren Übersetzungsverhältnisse $i_D$, $i_E$. Im Fall des Antriebsstrang-Prüfstands 1 mit Anpassgetrieben 6, 7, 7' gemäß Fig. 2 ergibt sich etwa für die Soll-Drehzahl $n_{E,\mathrm{soll}}$ der Eintriebsmaschine 2

$$n_{E,\mathrm{soll}} = i_E\, i_D\, \frac{n_{A1,\mathrm{soll}} + n_{A2,\mathrm{soll}}}{2} \qquad (16)$$

Fig. 6 zeigt die - im Vergleich zu Fig. 3 - dramatische Verbesserung des Eintriebs-Drehmomentverlaufs 9' bei einem Lastwechsel, d.h. einer Variation 8 des Vorgabewerts $M_{\mathrm{soll}}$. Hierbei wurde die Führungsgröße $M_x$ für die Drehmomentregelung der Eintriebsmaschine 2 anhand des Reifenmodells gemäß Gleichung (9) mit der Fahrbahngeschwindigkeit nach dem inversen Reifenmodell gemäß Gleichung (14) dynamisch ermittelt.

Alternativ zu der in Gleichung (5) angegebenen statischen Beziehung des Schlupfs s zur Winkelgeschwindigkeit $\omega_R$ und Fahrbahngeschwindigkeit v kann speziell die dämpfende Wirkung des virtuellen Reifens durch eine detailliertere Beschreibung verbessert werden, die die Dynamik des Kraftaufbaus mitberücksichtigt. Beispielsweise findet man in der Literatur das so genannte "Kontaktpunktmodell" (single contact point transient tyre model, s. Pacejka, 2007), bei dem ein Kontaktpunkt zwischen Reifen und Fahrbahn aufgrund der Geschwindigkeitsunterschiede eine gewisse Auslenkung u aus der Ruhelage erfährt, die mit der Differentialgleichung

$$\frac{du}{dt} = -\frac{|v|}{\sigma_\kappa} u - v_{sx} \qquad (17)$$

mit der Schlupfgeschwindigkeit

$$v_{sx} = v - r_R \omega_R \qquad (18)$$

und der maximalen Auslenkung $\sigma_\kappa$ (Relaxationslänge) beschrieben wird. Der Schlupf s könnte nun prinzipiell mit

$$s = \frac{u}{\sigma_\kappa} \quad\quad\quad (19)$$

berechnet werden. Um auch bei niedrigen Geschwindigkeiten ein besser gedämpftes Verhalten zu erzielen, wird von Pacejka die Berechnung nach

$$s = \frac{u}{\sigma_\kappa} - \frac{k_{v,low}}{c_{F\kappa}} v_{sx} \quad\quad\quad (20)$$

mit

$$k_{v,low} = \begin{cases} \frac{1}{2} k_{v,low0} \left[ 1 + \cos\left(\pi \frac{|v|}{v_{low}}\right) \right] & \text{für} \quad |v| \leq v_{low} \\ 0 & \text{für} \quad |v| > v_{low} \end{cases} \quad\quad (21)$$

und der Schlupfsteifheit $c_{F\kappa}$ vorgeschlagen.

Das vorliegende Verfahren bzw. die vorliegende Regeleinrichtung ist keinesfalls auf ein bestimmtes Reifenmodell beschränkt. Alternativ zu dem in Gleichung (6) angegebenen Modell von Pacejka (der "magischen Formel") kann beispielsweise das Reifenmodell "TMsimple" von Hirschberg mit der prinzipiellen Formel

$$\mu(s) = K \sin\left[ B\left(1 - e^{\frac{-|s|}{A}}\right) \text{sign}(s) \right] \quad\quad\quad (22)$$

wobei K, B und A Modellparameter sind, oder das Reifenmodell "TMeasy" von Rill mit der prinzipiellen Formel

$$\mu(s) = \begin{cases} s_M \mu_0' \dfrac{\sigma}{1 + \sigma\left(\dfrac{s_M}{f_M}\mu_0' - 2 + \sigma\right)} & \text{mit} \quad \sigma = \dfrac{s}{s_M} & \text{für} \quad 0 \leq s \leq s_M \\ \mu_M - (\mu_M - \mu_G)\sigma^2(3 - 2\sigma) & \text{mit} \quad \sigma = \dfrac{s - s_M}{s_G - s_M} & \text{für} \quad s_M \leq s \leq s_G \\ \mu_G & & \text{für} \quad s_G \leq s \end{cases} \quad (23)$$

wobei $s_M$, $s_G$, $f_M$, $\mu_0'$, $\mu_M$ und $\mu_G$ (teilweise abhängige) Modellparameter sind, verwendet werden.

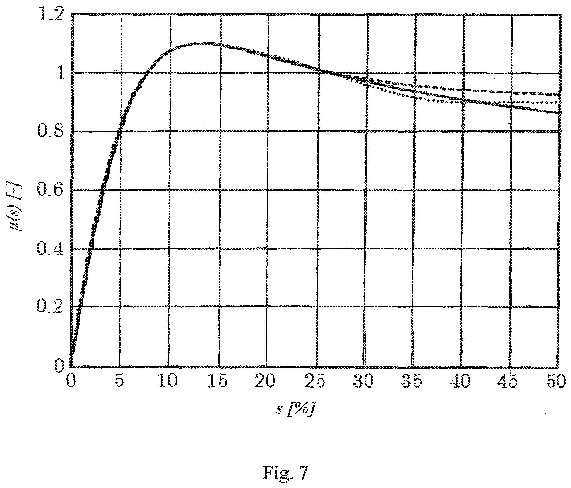

Die sich aus den angeführten Reifenmodellen ergebenden Reibwert-Schlupf-Kennlinien sind sehr ähnlich, d.h. sie weisen - zumindest im interessierenden Bereich - einen sehr ähnlichen Verlauf auf. Die Verläufe der drei hier angegebenen Reifenmodelle sind in dem in Fig. 7 gezeigten Diagramm eingezeichnet, wobei aus Platzgründen lediglich der erste Quadrant des Koordinatensystems dargestellt ist. Der Verlauf im dritten Quadranten ist jeweils analog (vgl. Fig. 5). Die durchgezogene Linie in Fig. 7 repräsentiert die "magische Formel" von Pacejka (s. Gleichung (6)), die gestrichelte Linie repräsentiert das "TMsimple"-Modell (s. Gleichung (22)) und die gepunktete Linie das "TMeasy"-Modell (s. Gleichung (23)).

Abhängig von der Wahl des Modells und der Modellparameter können selbstverständlich auch quantitativ stärker abweichende Verläufe vorgesehen sein. Fig. 7 demonstriert das durch Reifenmodelle ganz allgemein erzielte qualitative Verhalten der Führungsgröße, insbesondere mit einem stetigen Verlauf der Reibwert-Schlupf-Kennlinie, welcher ausgehend vom Nullpunkt zunächst annähernd linear ansteigt, anschließenden abflacht und schließlich mit noch weiter steigendem Schlupf monoton fällt.

**Patentansprüche**

1. Verfahren zur Regelung eines Antriebsstrang-Prüfstands (1) mit einer Eintriebsmaschine (2) und einer Abtriebsmaschine (3, 3'), wobei ein von der Eintriebsmaschine (2) aufgebrachtes Drehmoment geregelt wird, wobei eine Führungsgröße ($M_x$) für die Regelung des Drehmoments der Eintriebsmaschine (2) zur Dämpfung von Schwingungen zwischen der Eintriebsmaschine (2) und der Abtriebsmaschine (3, 3') in Abhängigkeit von einer aktuellen Drehzahl ($n_{ist}$) der Eintriebsmaschine (2) gegenüber einem Vorgabewert ($M_{soll}$) modifiziert wird, **dadurch gekennzeichnet, dass** die Führungsgröße ($M_x$) aus einem Reifenmodell (10) eines virtuellen Reifens ermittelt wird.

2. Verfahren nach Anspruch 1, **dadurch gekennzeichnet, dass** das Reifenmodell (10) einen, vorzugsweise statischen, Zusammenhang zwischen der Führungsgröße ($M_x$) und einem Schlupf des virtuellen Reifens herstellt.

3. Verfahren nach Anspruch 1 oder 2, **dadurch gekennzeichnet, dass** die Führungsgröße ($M_x$) im Wesentlichen nach der Formel $M_x = F_z \cdot r_{dyn} \cdot D \cdot \sin(C \cdot \arctan(B \cdot s))$ berechnet wird, wobei $F_z$ eine Aufstandskraft, $r_{dyn}$ ein Rollradius, B, C und D konstante Reifenparameter und s ein Schlupf des virtuellen Reifens ist.

4. Verfahren nach einem der Ansprüche 1 bis 3, **dadurch gekennzeichnet, dass** eine virtuelle Fahrbahngeschwindigkeit (v), welche in das Reifenmodell (10), insbesondere in den Schlupf des virtuellen Reifens, eingeht, aus einem inversen Reifenmodell (11) ermittelt wird.

5. Verfahren nach Anspruch 4, **dadurch gekennzeichnet, dass** die virtuelle Fahrbahngeschwindigkeit (v) aus dem Vorgabewert ($M_{soll}$) für die Führungsgröße ($M_x$) und einer Soll-Drehzahl ($n_{soll}$) der Eintriebsmaschine (2) ermittelt wird, welche Soll-Drehzahl ($n_{soll}$) vorzugsweise proportional einer Soll-Drehzahl der Abtriebsmaschine (3, 3') ist.

6. Verfahren nach Anspruch 4 oder 5, **dadurch gekennzeichnet, dass** das inverse Reifenmodell (11) einen linearen Zusammenhang zwischen der virtuellen Fahrbahngeschwindigkeit (v) und der Soll-Drehzahl ($n_{soll}$) der Eintriebsmaschine (2) herstellt.

7. Regeleinrichtung eines Antriebsstrang-Prüfstands (1) mit einer Eintriebsmaschine (2) und einer Abtriebsmaschine (3, 3'), zur Durchführung des Verfahrens nach einem der Ansprüche 1 bis 6, mit einem inneren Regelkreis zur Regelung eines von der Eintriebsmaschine (2) aufgebrachten Drehmoments und mit einem äußeren Regelkreis zur Regelung der Führungsgröße ($M_x$) des inneren Regelkreises in Abhängigkeit einer aktuellen Drehzahl ($n_{ist}$) der Eintriebsmaschine (2), **dadurch gekennzeichnet, dass** der äußere Regelkreis ein Reifenmodell (10) eines virtuellen Reifens aufweist.

8. Regeleinrichtung nach Anspruch 7, **dadurch gekennzeichnet, dass** das Reifenmodell (10) einen, vorzugsweise statischen, Zusammenhang zwischen der Führungsgröße ($M_x$) und einem Schlupf des virtuellen Reifens aufweist.

9. Regeleinrichtung nach Anspruch 7 oder 8, **dadurch gekennzeichnet, dass** der äußere Regelkreis zur Ermittlung der Führungsgröße ($M_x$) im Wesentlichen nach der Formel $M_x = F_z \cdot r_{dyn} \cdot D \cdot \sin(C \cdot \arctan(B \cdot s))$ eingerichtet ist, wobei $F_z$ eine Aufstandskraft, $r_{dyn}$ ein Rollradius, B, C und D konstante Reifenparameter und s ein Schlupf des virtuellen Reifens ist.

10. Regeleinrichtung nach einem der Ansprüche 7 bis 9, **dadurch gekennzeichnet, dass** der äußere Regelkreis zur Ermittlung einer virtuellen Fahrbahngeschwindigkeit (v), welche in das Reifenmodell (10), insbesondere in den Schlupf des virtuellen Reifens, eingeht, aus einem inversen Reifenmodell (11) eingerichtet ist.

11. Regeleinrichtung nach Anspruch 10, **dadurch gekennzeichnet, dass** der äußere Regelkreis zur Ermittlung der virtuellen Fahrbahngeschwindigkeit (v) aus einem Vorgabewert ($M_{soll}$) für die Führungsgröße ($M_x$) und einer Soll-Drehzahl ($n_{soll}$) der Eintriebsmaschine (2) eingerichtet ist, wobei die Soll-Drehzahl ($n_{soll}$) vorzugsweise proportional einer Soll-Drehzahl der Abtriebsmaschine (3, 3') ist.

12. Regeleinrichtung nach Anspruch 10 oder 11, **dadurch gekennzeichnet, dass** das inverse Reifenmodell (11) einen linearen Zusammenhang zwischen der virtuellen Fahrbahngeschwindigkeit (v) und der Soll-Drehzahl ($n_{soll}$) der Eintriebsmaschine (2) aufweist.

**Claims**

1. A method for controlling a powertrain test stand (1) comprising a driving machine (2) and a driven machine (3, 3'), wherein a torque supplied by the driving machine (2) is controlled, a reference variable ($M_x$) for controlling the torque of the driving machine (2) in order to dampen vibrations between the driving machine (2) and the driven machine (3, 3') being modified depending on a current speed ($n_{ist}$) of the driving machine (2) in relation to a predefined value ($M_{soll}$), **characterized in that** the reference variable ($M_x$) is determined from a tire model (10) of a virtual tire.

2. The method according to claim 1, **characterized in that** the tire model (10) establishes a preferably statistical connection between the reference variable ($M_x$) and a slip of the virtual tire.

3. The method according to claim 1 or 2, **characterized in that** the reference variable ($M_x$) is calculated essentially according to the formula $M_X=F_z \cdot r_{dyn} \cdot D \cdot sin(C \cdot arctan(B \cdot s))$, with $F_z$ being a contact force, $r_{dyn}$ a rolling radius, B, C and D constant parameters and s a slip of the virtual tire.

4. The method according to one of claims 1 to 3, **characterized in that** a virtual roadway speed (v), which is included in the tire model (10), in particular in the slip of the virtual tire, is determined from an inverse tire model (11).

5. The method according to claim 4, **characterized in that** the virtual roadway speed (v) is determined from the predefined value ($M_{soll}$) for the reference variable ($M_x$) and a target speed ($n_{soll}$) of the driving machine (2), which target speed ($n_{soll}$) is preferably proportional to a target speed of the driven machine (3, 3').

6. The method according to claim 4 or 5, **characterized in that** the inverse tire model (11) establishes a linear connection between the virtual roadway speed (v) and the target speed ($n_{soll}$) of the driving machine (2).

7. A control device of a powertrain test stand (1) comprising a driving machine (2) and a driven machine (3, 3'), to perform the method according to one of claims 1 to 6, comprising an inner control loop for controlling a torque applied by the driving machine (2) and comprising an outer control loop for controlling the reference variable ($M_x$) of the inner control loop as a function of a current speed ($n_{ist}$) of the driving machine (2), **characterized in that** the outer control loop comprises a tire model (10) of a virtual tire.

8. The control device according to claim 7, **characterized in that** the tire model (10) comprises a preferably static connection between the reference variable ($M_x$) and a slip of the virtual tire.

9. The control device according to claim 7 or 8, **characterized in that** the outer control loop is adapted to determine the reference variable ($M_x$) essentially in accordance with the formula $M_X=F_z \cdot r_{dyn} \cdot D \cdot sin(C \cdot arctan(B \cdot s))$, with $F_z$ being a contact force, $r_{dyn}$ a rolling radius, B, C and D constant parameters and s a slip of the virtual tire.

10. The control device according to one of claims 7 to 9, **characterized in that** the outer control loop is adapted to determine a virtual roadway speed (v), which is included in the tire model (10), in particular in the slip of the virtual tire, from an inverse tire model (11).

11. The control device according to claim 10, **characterized in that** the outer control loop is adapted to determine the virtual roadway speed (v) from a predefined value ($M_{soll}$) for the reference variable ($M_x$) and a target speed ($n_{soll}$) of the driving machine (2), wherein the target speed ($n_{soll}$) is preferably proportional to a target speed of the driven machine (3, 3').

12. The control device according to claim 10 or 11, **characterized in that** the inverse tire model (11) has a linear connection between the virtual roadway speed (v) and the target speed ($n_{soll}$) of the driving machine (2).

**Revendications**

1. Procédé de régulation d'un banc d'essai de chaîne cinématique (1) avec un moteur d'entrée (2) et un moteur de sortie (3, 3'), dans lequel un couple de rotation appliqué par le moteur d'entrée (2) est régulé, dans lequel une grandeur de référence ($M_x$) pour la régulation du couple de rotation du moteur d'entrée (2) est modifiée en fonction d'une vitesse de rotation effective ($n_{réelle}$) du moteur d'entrée (2) par rapport à une valeur de spécification ($M_{théorique}$) pour amortir des vibrations entre le moteur d'entrée (2) et le moteur de sortie (3, 3'), **caractérisé en ce que** la

grandeur de référence ($M_x$) est déterminée à partir d'un modèle de pneumatique (10) d'un pneumatique virtuel.

2. Procédé selon la revendication 1, **caractérisé en ce que** le modèle de pneumatique (10) établit un lien, de préférence statique, entre la grandeur de référence ($M_x$) et un patinage du pneumatique virtuel.

3. Procédé selon la revendication 1 ou 2, **caractérisé en ce que** la grandeur de référence ($M_x$) est calculée sensiblement selon la formule $M_x = F_z \cdot r_{dyn} \cdot D \cdot \sin(C \cdot \arctan(B \cdot s))$, dans lequel $F_z$ est une force de contact, $r_{dyn}$ est un rayon de roulement, B, C et D sont des paramètres de pneumatique constants et s est un patinage du pneumatique virtuel.

4. Procédé selon l'une quelconque des revendications 1 à 3, **caractérisé en ce qu'**une vitesse sur chaussée virtuelle (v), laquelle entre dans le modèle de pneumatique (10), en particulier dans le patinage du pneumatique virtuel, est déterminée à partir d'un modèle de pneumatique inversé (11).

5. Procédé selon la revendication 4, **caractérisé en ce que** la vitesse sur chaussée virtuelle (v) est déterminée à partir de la valeur de spécification ($M_{théorique}$) pour la grandeur de référence ($M_x$) et d'une vitesse de rotation théorique ($n_{théorique}$) du moteur d'entrée (2), laquelle vitesse de rotation théorique ($n_{théorique}$) est de préférence proportionnelle à une vitesse de rotation théorique du moteur de sortie (3, 3').

6. Procédé selon la revendication 4 ou 5, **caractérisé en ce que** le modèle de pneumatique inversé (11) établit un lien linéaire entre la vitesse sur chaussée virtuelle (v) et la vitesse de rotation théorique ($n_{théorique}$) du moteur d'entrée (2).

7. Dispositif de régulation d'un banc d'essai de chaîne cinématique (1) avec un moteur d'entrée (2) et un moteur de sortie (3, 3'), servant à mettre en œuvre le procédé selon l'une quelconque des revendications 1 à 6, avec un circuit de régulation interne servant à réguler un couple de rotation appliqué par le moteur d'entrée (2) et avec un circuit de régulation externe servant à réguler la grandeur de référence ($M_x$) du circuit de régulation interne en fonction d'une vitesse de rotation effective ($n_{réelle}$) du moteur d'entrée (2), **caractérisé en ce que** le circuit de régulation externe présente un modèle de pneumatique (10) d'un pneumatique virtuel.

8. Dispositif de régulation selon la revendication 7, **caractérisé en ce que** le modèle de pneumatique (10) présente un lien, de préférence statique, entre la grandeur de référence ($M_x$) et un patinage du pneumatique virtuel.

9. Dispositif de régulation selon la revendication 7 ou 8, **caractérisé en ce que** le circuit de régulation externe est mis au point pour déterminer la grandeur de référence ($M_x$) sensiblement selon la formule $M_x = F_z \cdot r_{dyn} \cdot D \cdot \sin(C \cdot \arctan(B \cdot s))$, dans lequel $F_z$ est une force de contact, $r_{dyn}$ est un rayon de roulement, B, C et D sont des paramètres de pneumatique constants et s est un patinage du pneumatique virtuel.

10. Dispositif de régulation selon l'une quelconque des revendications 7 à 9, **caractérisé en ce que** le circuit de régulation externe est mis au point pour déterminer une vitesse sur chaussée virtuelle (v), laquelle entre dans le modèle de pneumatique (10), en particulier dans le patinage du pneumatique virtuel, à partir d'un modèle de pneumatique inversé (11).

11. Dispositif de régulation selon la revendication 10, **caractérisé en ce que** le circuit de régulation externe est mis au point pour déterminer la vitesse sur chaussée virtuelle (v) à partir d'une valeur de spécification ($M_{théorique}$) pour la grandeur de référence ($M_x$) et d'une vitesse de rotation théorique ($n_{théorique}$) du moteur d'entrée (2), dans lequel la vitesse de rotation théorique ($n_{théorique}$) est proportionnelle à une vitesse de rotation théorique du moteur de sortie (3, 3').

12. Dispositif de régulation selon la revendication 10 ou 11, **caractérisé en ce que** le modèle de pneumatique inversé (11) présente un lien linéaire entre la vitesse sur chaussée virtuelle (v) et la vitesse de rotation théorique ($n_{théorique}$) du moteur d'entrée (2).

Fig. 1

Fig. 2

Fig. 3

Fig. 6

11

$M_{soll}$

$n_{soll}$

inverses
Reifenmodell

$v$

10

$n_{ist}$

$M_x$

Fig. 4

12

Fig. 5

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3808524 C2
- EP 1333268 A2
- WO 2013126940 A1
- DE 10247347 A
- US 4468958 A
- AT 010301 U2
- US 8006548 B2
- AT 508031 B1

- EP 1037030 B1
- US 20120166154 A1
- DE 102010049689 A1
- DE 102010049687 A1
- AT 512483 A2
- US 20110303000 A1
- US 6754615 B1

### In der Beschreibung aufgeführte Nicht-Patentliteratur

- **PACEJKA H.** Tyre and Vehicle Dynamics. Butterworth-Heinemann, 2007
- **HIRSCHBERG W.** TMsimple Application Manual. 2007

- **RILL G.** Simulation von Kraftfahrzeugen. Vieweg-Verlag, 2007